(19) Europäisches Patentamt / European Patent Office / Office européen des brevets

(11) **EP 3 037 680 A1**

(12) **EUROPEAN PATENT APPLICATION**

(43) Date of publication:
**29.06.2016 Bulletin 2016/26**

(51) Int Cl.:
**F15D 1/02** *(2006.01)* **F15B 21/04** *(2006.01)*

(21) Application number: **15202252.1**

(22) Date of filing: **23.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.12.2014 JP 2014259586**

(71) Applicant: **Hitachi Construction Machinery Co., Ltd.**
**Bunkyo-ku,**
**Tokyo 112-8563 (JP)**

(72) Inventors:
• **KUMAGAI, Kento**
**Tsuchiura-shi, Ibaraki 300-0013 (JP)**
• **ITO, Hideaki**
**Tsuchiura-shi, Ibaraki 300-0013 (JP)**

(74) Representative: **MERH-IP Matias Erny Reichl Hoffmann**
**Patentanwälte PartG mbB**
**Paul-Heyse-Strasse 29**
**80336 München (DE)**

(54) **THROTTLE VALVE**

(57) A housing (22) is provided with a valve body mounting hole 22A one end of which opens to an outside thereof and that extends in the axis line (01-01) direction. A valve body (25) having an oil chamber (26) formed inside thereof is mounted in the valve body mounting hole (22A). The valve body (25) is provided with throttle holes (27) that establish communication between an inflow part (23) and the oil chamber (26) of the housing (22) and restrict the oil flowing into the oil chamber (26), and communicating holes (28) that establish communication between an outflow part (24) and the oil chamber (26) of the housing (22). When a total oil passage cross-sectional area of the throttle holes (27) is indicated at A, and a minimum oil passage cross-sectional area of the oil chamber (26) is indicated at B, a relation of A<B is set.

Fig.3

## Description

TECHNICAL FIELD

The present invention relates to a throttle valve used suitably for, for example, a hydraulic circuit for a hydraulic equipment mounted on a construction machine or the like.

BACKGROUND ART

In general, a throttle valve used in a hydraulic circuit restricts a flow passage area (flow passage cross-sectional area) to be small to create a pressure difference across the throttle valve, thus controlling the pressure or flow amount in the hydraulic circuit. Here, when hydraulic oil passes through a throttle hole in the throttle valve, the flow speed of the hydraulic oil rapidly increases according to Bernoulli's law, and at the same time, the pressure of the hydraulic oil in the hydraulic circuit rapidly decreases. At this time, when the pressure of the hydraulic oil is lower than the saturation evaporation pressure determined by the kind of the hydraulic oil due to this rapid pressure decrease, air bubbles are generated and expand in the liquid, which causes cavitation.

Further, the air bubbles generated in the throttle hole are forced to flow in the downstream side of the throttle hole with a high-speed fluid jet flow. At this time, since the pressure in the downstream side is higher than the pressure in the throttle hole where the cavitation is generated, the pressure in the periphery of the air bubbles gradually recovers and the air bubbles are finally squeezed by the recovered pressure. The high impact pressure is locally generated at the moment when the air bubbles are squeezed and collapsed, which thus damages an equipment member surface to generate erosion thereon.

In addition, in a case where the damage of the equipment member has developed due to generation of the erosion, the equipment member may be possibly destructed finally. That is, the generation of the erosion leads to a reduction in equipment life. Further, there is also a possibility that pieces (erosion powder) of the damaged member flow into the hydraulic circuit, which become contaminations (impurities) causing another hydraulic equipment to be stuck (is fixed due to impurities biting), thus damaging the hydraulic equipment. As the pressure difference that is a control target of the throttle valve is larger or the flow amount is larger, the erosion is inclined to be the more easily generated. Suppressing the erosion to be generated in the throttle valve as much as possible is the required condition in view of ensuring reliability of the hydraulic circuit.

On the other hand, Patent Document 1 describes a technology in regard to a multistep throttle valve configured of a plurality of throttle holes and a plurality of pressure chambers. This multistep throttle valve is assumed to have the aim that the pressure is gradually reduced in the plurality of pressure chambers to alleviate a pressure reduction in each of the throttle holes, thus suppressing the generation of the cavitation.

PRIOR ART DOCUMENT

PATENT DOCUMENT

Patent Document 1: Japanese Patent Laid-Open No. Sho 61-31772 A (Japanese Patent Examined Publication No. Hei 2-11786 B)

SUMMARY OF THE INVENTION

Incidentally, the multistep throttle valve according to Patent Document 1 is assumed to aim at the suppression of the erosion by suppressing the generation of the cavitation by the multistep throttle holes. However, in the multistep throttle valve according to Patent Document 1, since the flow passage therein is complicated, the burden on a designer increases, and besides, an increase on manufacturing costs and replacement costs is unavoidable. In addition, when the flow passage in the throttle valve is complicated, the flow of the fluid itself becomes complicated, which possibly makes it difficult to maintain the flow condition for enabling the generation of the cavitation to be suppressed. Further, when the erosion is generated once, the separated pieces are inclined to be easily jammed structurally, and the valve performance or lifetime of the throttle valve is possibly reduced rapidly, leading to a problem of the difficulty of ensuring the robust characteristics (characteristics of continuing to maintain constant performance).

The present invention is made in view of the foregoing problem in the conventional art, and an object of the present invention is to provide a throttle valve that can reduce the generation of erosion and maintain robust characteristics of the valve performance.

A throttle valve according to the present invention comprises: a housing provided with a hollow cylindrical valve body mounting hole at least one end of which opens to an outside thereof and that extends in the axis line direction; an inflow part and an outflow part that are provided to open to the valve body mounting hole of the housing and be separated from each other in the axis line direction, the inflow part allowing for inflow of oil from the outside and the outflow part allowing for outflow of the oil having flowed therein to the outside; a hollow shaped valve body that is mounted in the valve body mounting hole of the housing and is provided with an oil chamber formed therein; and a plug that is mounted in an opening side of the valve body mounting hole of the housing and pushes the valve body against the housing.

For solving the aforementioned problem, the configuration adopted by the present invention is characterized in that the valve body is formed as a cylindrical body at least one end in the axis line direction of which is an opening end to be closed by the plug, and the valve body includes at least one of throttle holes that establish communication between the inflow part and the oil chamber of the housing and restrict the oil flowing into the oil chamber, and one or a plurality of communicating holes that are arranged to be separated from the throttle holes in the axis line direction of the valve body to establish communication between the outflow part and the oil chamber of the housing, wherein when a total oil passage cross-sectional area of the throttle holes is indicated at A, and a minimum oil passage cross-sectional area of the oil chamber is indicated at B, a relation of A<B is set.

According to the throttle valve in the present invention, the generation of the erosion can be reduced to maintain the robust characteristics of the valve performance. More specifically, with the simple, single-step throttle structure, the burden on a designer or the manufacturing costs can be reduced. In addition thereto, with the cushion effect obtained by causing cavitation air bubbles to stay in the oil chamber as the downstream part positioned immediately after the restriction, it is possible to effectively suppress the generation of the erosion. As a result, it is possible to provide the throttle valve having the high robust characteristics of the valve performance on disturbance of the flow and the erosion.

BRIEF DESCRIPTION OF THE DRAWINGS

Fig. 1 is a front view showing a hydraulic excavator on which a throttle valve is mounted according to an embodiment.
Fig. 2 is a hydraulic circuit diagram for driving a cylinder in the hydraulic excavator in Fig. 1.
Fig. 3 is a cross sectional view showing the throttle valve according to a first embodiment.
Fig. 4 is an enlarged cross sectional view showing (IV) part in Fig. 3 for explaining the flow of oil.
Fig. 5 is a cross sectional view as viewed in a direction of arrows V-V in Fig. 4.
Fig. 6 is a cross sectional view showing a throttle valve according to a second embodiment.
Fig. 7 is a cross sectional view as viewed in a direction of arrows VII-VII in Fig. 6.
Fig. 8 is a cross sectional view showing a throttle valve according to a third embodiment, as similar to that of Fig. 4.
Fig. 9 is a cross sectional view as viewed in a direction of arrows IX-IX in Fig. 8.
Fig. 10 is a cross sectional view showing a throttle valve according to a fourth embodiment, as similar to that of Fig. 4.
Fig. 11 is a cross sectional view as viewed in a direction of arrows XI-XI in Fig. 10.
Fig. 12 is a cross sectional view showing a throttle valve according to a fifth embodiment.
Fig. 13 is a cross sectional view showing a throttle valve according to a sixth embodiment.

Fig. 14 is a cross sectional view showing a throttle valve according to a first modification.
Fig. 15 is a cross sectional view showing a throttle valve according to a second modification.

MODE FOR CARRYING OUT THE INVENTION

Hereinafter, throttle valves according to embodiments of the present invention will be in detail explained referring to the accompanying drawings by taking a case where the throttle valve is applied to a throttle valve of a slow return valve type mounted on a hydraulic excavator, as an example.

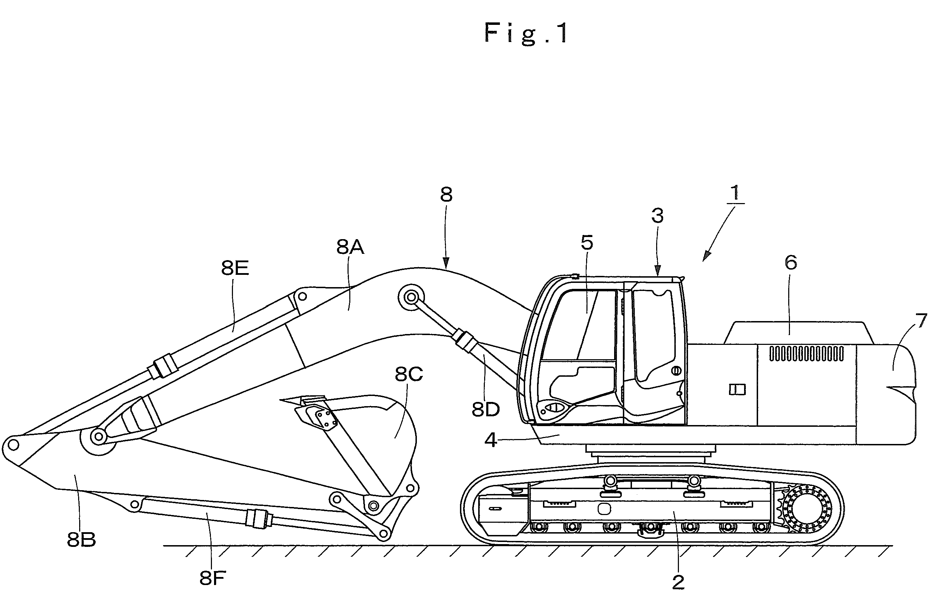

Fig. 1 to Fig. 5 show a throttle valve according to a first embodiment of the present invention.

In Fig. 1, a hydraulic excavator 1 as a representative example of a construction machine is used for an excavating work of earth and sand or the like. The hydraulic excavator 1 is configured by a crawler type of automotive lower traveling structure 2, an upper revolving structure 3 that is mounted on the lower traveling structure 2 to be capable of revolving thereon and configures a vehicle body together with the lower traveling structure 2, and a working mechanism 8 that is provided in a front side of the upper revolving structure 3 in the front-rear direction to be capable of lifting and tilting thereto.

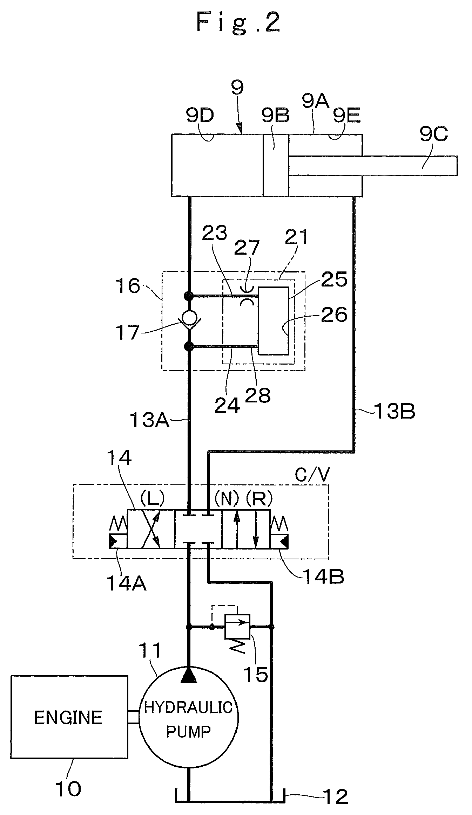

Here, the upper revolving structure 3 is provided with a revolving frame 4. The revolving frame 4 is formed as a stout support structure by welding a plurality of steel plates or the like. On the revolving frame 4, there are provided a cab 5 that defines an operator's room in the front part side, and a housing cover 6 that accommodates, for example, a prime mover 10 and a hydraulic pump 11 (for both, refer to Fig. 2) which will be described later and the like in the rear side of the cab 5. A counterweight 7 is provided in the rear end side of the revolving frame 4. The counterweight 7 acts as a weight balance to the working mechanism 8 placed in the front part side in the entire upper revolving structure 3.

The working mechanism 8 is provided in the front side of the revolving frame 4. The working mechanism 8 includes a boom 8A, an arm 8B, and a bucket 8C as a working tool. The base end side of the boom 8A is mounted on the front part of the revolving frame 4 to be capable of lifting and tilting thereto. The arm 8B is mounted in the front end side of the boom 8A to be capable of lifting and tilting. The bucket 8C is rotatably provided in the front end side of the arm 8B for performing an excavating work of earth and sand, for example.

The boom 8A of the working mechanism 8 is lifted/tilted to the revolving frame 4 by a boom cylinder 8D. The arm 8B is lifted/tilted in the front end side of the boom 8A by an arm cylinder 8E. The bucket 8C is rotated upward/downward in the front end side of the arm 8B by a bucket cylinder 8F as a working cylinder.

Next, an explanation will be made of a hydraulic circuit for driving a cylinder 9 in the hydraulic excavator 1 with reference to Fig. 2.

The cylinder 9 as a hydraulic actuator configures, for example, any one of the boom cylinder 8D, the arm cylinder 8E or the bucket cylinder 8F in the working mechanism 8. In the embodiment, the hydraulic cylinder 9 corresponds to the boom cylinder 8D, for example.

The hydraulic cylinder 9 has a tube 9A, a piston 9B and a rod 9C. The piston 9B defines a bottom side oil chamber 9D and a rod side oil chamber 9E in the tube 9A. The base end side of the rod 9C is fixed to the piston 9B. The front end side of the rod 9C projects outside of the tube 9A. The rod 9C of the hydraulic cylinder 9 extends/contracts by the pressurized oil supplied to or discharged from the oil chambers 9D, 9E in the tube 9A. This extension/contraction allows for the lifting/tilting movement of the boom 8A, for example.

The prime mover 10 is mounted on the revolving frame 4 in front of the counterweight 7. The prime mover 10 rotates the hydraulic pump 11, that is, acts as rotating source of the hydraulic pump 11. The prime mover 10 is configured by, for example, a diesel engine, an electric motor or the like.

The hydraulic pump 11 configures the hydraulic source together with a tank 12. The hydraulic pump 11 is driven by the prime mover 10 to deliver the hydraulic oil suctioned from the tank 12 as high-pressure oil. This pressurized oil is supplied to the bottom side oil chamber 9D or the rod side oil chamber 9E in the hydraulic cylinder 9 via a directional control valve 14.

A pair of main lines 13A, 13B connect the hydraulic pump 11 and the hydraulic cylinder 9. One main line 13A thereof connects the bottom side oil chamber 9D in the hydraulic cylinder 9 and the directional control valve 14. The other main line 13B connects the rod side oil chamber 9E in the hydraulic cylinder 9 and the directional control valve 14. The main lines 13A, 13B deliver the pressurized oil from the hydraulic pump 11 to the oil chambers 9D, 9E in the hydraulic cylinder 9 via the directional control valve 14 or discharge it from the oil chambers 9D, 9E in the hydraulic cylinder 9 to the tank 12 via the directional control valve 14. As a result, the rod 9C in the hydraulic cylinder 9 extends or contracts.

The directional control valve 14 drives/controls the hydraulic cylinder 9. The directional control valve 14 is configured of a hydraulic pilot type directional control valve provided between the hydraulic pump 11, the tank 12 and the hydraulic cylinder 9. Hydraulic pilot portions 14A, 14B are provided in both of the left and right sides of the directional control valve 14. The directional control valve 14 represents a control valve (C/V) used in the boom cylinder 8D, the arm cylinder 8E and the bucket cylinder 8F represented by the hydraulic cylinder 9. The directional control valve 14 is switched to any of switching positions (L) and (R) from a neutral position (N) based upon supply of the pilot pressure to the hydraulic pilot portions 14A, 14B.

When the directional control valve 14 is switched from the neutral position (N) to the switching position (R), the pressurized oil from the hydraulic pump 11 is supplied to the bottom side oil chamber 9D in the hydraulic cylinder 9 via the main line 13A. On the other hand, the hydraulic oil in the rod side oil chamber 9E is discharged to the tank 12 via the main line 13B. Therefore, the hydraulic cylinder 9 is driven in a direction where the rod 9C extends.

When the directional control valve 14 is switched from the neutral position (N) to the switching position (L), the pressurized oil from the hydraulic pump 11 is supplied to the rod side oil chamber 9E in the hydraulic cylinder 9 via the main line 13B. On the other hand, the hydraulic oil in the bottom side oil chamber 9D is discharged to the tank 12 via the main line 13A. Therefore, the hydraulic cylinder 9 is driven in a direction where the rod 9C contracts.

A relief valve 15 is provided between the hydraulic pump 11 and the directional control valve 14. The relief valve 15 releases the hydraulic oil at a preset pressure or more to suppress damage of the hydraulic pump 11 and the main lines 13A, 13B.

A slow return valve 16 is provided in the main line 13A. The slow return valve 16 includes a check valve 17 that is positioned between the directional control valve 14 and the hydraulic cylinder 9 and is provided in the main line 13A, and a throttle valve 21, which will be described later, that is connected to the main line 13A in parallel with the check valve 17. When the slow return valve 16 supplies the pressurized oil from the main line 13A side into the bottom side oil chamber 9D in the hydraulic cylinder 9, the check valve 17 opens. This causes the flow of the pressurized oil to be smooth.

On the other hand, at the time of discharging the hydraulic oil from the bottom side oil chamber 9D in the hydraulic cylinder 9 through the main line 13A, the check valve 17 of the slow return valve 16 closes. At this time, the hydraulic oil (returning oil) from the bottom side oil chamber 9D is discharged to the tank 12 side through the throttle valve 21. Therefore, a throttling function is given to the hydraulic oil flowing in the throttle valve 21. As a result, the movement that the rod 9C in the hydraulic cylinder 9 contracts into the tube 9A is suppressed to a slower speed by the throttle valve 21.

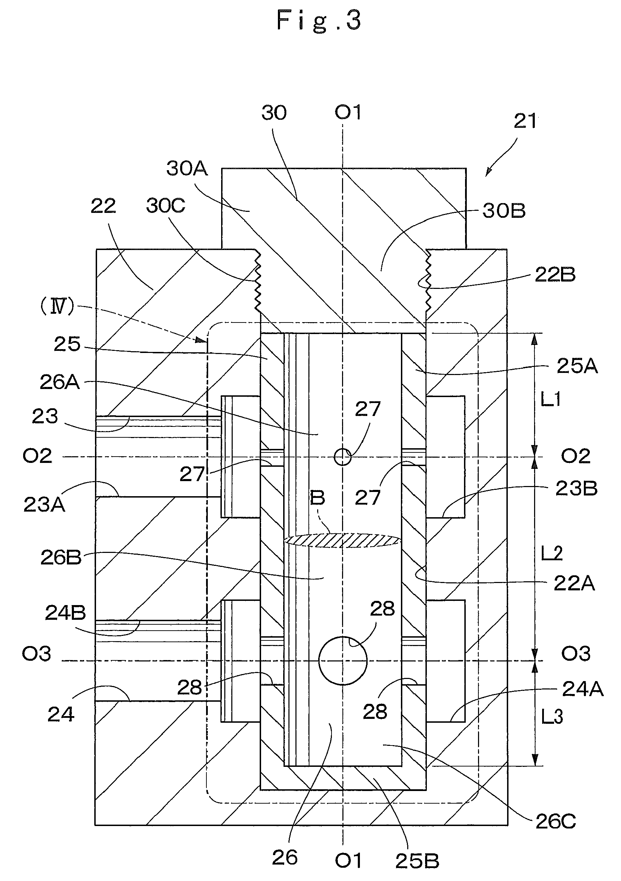

Next, an explanation will be made of the throttle valve 21 with reference to Fig. 3 to Fig. 5.

As shown in Fig. 3 to Fig. 5, the throttle valve 21 gives the throttling function to the hydraulic oil passing therethrough, and includes a housing 22, an inflow part 23 and an outflow part 24, a valve body 25 and a plug 30.

The housing 22 configures an outer shell of the throttle valve 21. The housing 22 is formed in a bottomed, cylindrical shape. That is, the housing 22 is provided with a hollow cylindrical, bottomed valve body mounting hole 22A one end (upper end in Fig. 3) of which opens to an outside of the housing 22. The valve body mounting hole 22A is formed in a circular form in cross section, and extends in a direction of the axis line O1-O1. An opening of the valve body mounting hole 22A is closed by the plug 30 in a state where the valve body 25 is being inserted into the valve body mounting hole 22A. Therefore, for example, the housing 22 is provided with a female screw 22B that is formed therein and is positioned in the opening of the valve body mounting hole 22A to be threaded into a male screw 30C of the plug 30.

The inflow part 23 and the outflow part 24 are provided in the housing 22. The inflow part 23 and the outflow part 24 are arranged in parallel with each other to be separated in a direction of the axis line O1-O1 of the valve body mounting hole 22A. The inflow part 23 and the outflow part 24 are provided to open to the valve body mounting hole 22A. The hydraulic oil flows into the inflow part 23 from an outside of the housing 22. The outflow part 24 causes the hydraulic oil having flowed into the housing 22 to flow to the outside thereof.

Here, the inflow part 23 is provided with an inflow side radial hole 23A that extends in a direction (axis line 02-02 direction) perpendicular to the axis line O1-O1 of the valve body mounting hole 22A and opens to the outside of the housing 22, and an inflow side annular groove 23B that is connected to the downstream side of the inflow side radial hole 23A and is recessed toward a radial outside over an entire circumference of the inner peripheral surface of the valve body mounting hole 22A. The hydraulic oil having flowed into the inflow part 23 from the outside of the housing 22 flows into an oil chamber 26 through the inflow side radial hole 23A and the inflow side annular groove 23B. In this case, a groove width of the inflow side annular groove 23B in the axis line O1-O1 direction is formed to be larger than a diameter of the inflow side radial hole 23A.

On the other hand, the outflow part 24 is provided with an outflow side annular groove 24A that is recessed toward a radial outside over an entire circumference of the inner peripheral surface of the valve body mounting hole 22A, and an outflow side radial hole 24B that extends in a direction (axis line 03-03 direction) perpendicular to the axis line O1-O1 of the valve body mounting hole 22A from a bottom surface of the outflow side annular groove 24A and opens to the outside of the housing 22. The hydraulic oil having flowed into the housing 22 (the hydraulic oil having flowed into the oil chamber 26 in the valve body 25) flows out into the outside of the housing 22 through the outflow side annular groove 24A and the outflow side radial hole 24B. In this case, a groove width of the outflow side annular groove 24A in the axis line O1-O1 direction is formed to be larger than a diameter of the outflow side radial hole 24B. The outflow side radial hole 24B of the outflow part 24 is arranged in parallel to the inflow side radial hole 23A of the inflow part 23.

The valve body 25 is mounted in the valve body mounting hole 22A of the housing 22. The valve body 25 is formed in a hollow shape, more specifically in a bottomed, cylindrical shape having a circular form in cross section, and an inside of the valve body 25 is formed as the oil chamber 26. That is, the valve body 25 includes a cylindrical part 25A that is formed in a circular form in cross section and extends in the axis line (O1-O1), and a bottom part 25B that is formed to be integral with the cylindrical part 25A and closes the other end (lower end in Fig. 3) of the cylindrical part 25A. Therefore, the valve body 25 has an opening end of which one end in the axis line O1-O1 direction is closed by the plug 30, and the other end that is formed as a cylindrical body closed as a bottom part 25B. In addition, the oil chamber 26 is formed as a columnar closed space (chamber) as a whole by an inner peripheral surface of the cylindrical part 25A and a bottom surface of the bottom part 25B in the valve body 25, and a lower surface of the plug 30. As described later, the hydraulic oil that has flowed in the oil chamber 26 through throttle holes 27 of the valve body 25 temporarily remains therein, and the hydraulic oil in the valve body 25 flows out through communicating holes 28.

Here, the cylindrical part 25A of the valve body 25 is provided with four throttle holes 27 that are formed in a position facing the inflow part 23, and four communicating holes 28 that are formed in a position facing the outflow part 24. The throttle holes 27 establish communication between the inflow part 23 and the oil chamber 26 of the housing 22 and restrict the hydraulic oil flowing into the oil chamber 26 from the inflow part 23. The communicating holes 28 establish communication between the outflow part 24 and the oil chamber 26 of the housing 22. The communicating holes 28 are separated from the throttle holes 27 in the axis line O1-O1 direction of the valve body 25 and are arranged in parallel with the throttle holes 27. The throttle hole 27 is a through hole that is disposed perpendicular to the axis line O1-O1 and extends in a radial direction to the axis line O1-O1. The communicating hole 28 is a through hole that is disposed perpendicular to the axis line O1-O1 and extends in a radial direction to the axis line 01-01.

The throttle holes 27 are provided to be separated from the opening end (end surface of the plug 30) of the valve body 25 at the other side in the axis line O1-O1 direction. The communicating holes 28 are provided to be separated from the closed end (bottom surface of the bottom part 25B) of the valve body 25 at one side in the axis line O1-O1 direction. As a result, as shown in Fig. 3, the oil chamber 26 is provided with a total of three oil chambers 26A, 26B, 26C, wherein the oil chamber 26A is a throttle hole side oil chamber 26A that is positioned between the throttle hole 27 and one end (end surface of the plug 30) of the oil chamber 26 in a side closer to the throttle hole 27 and has a predetermined axial length L1, the oil chamber 26B is a middle oil chamber 26B that is positioned between the throttle hole 27 and the communicating hole 28 and has a predetermined axial length L2, and the oil chamber 26C is a communicating hole side oil chamber 26C that is positioned between the communicating hole 28 and the other end (bottom surface of the bottom part 25B) of the oil chamber 26 in a side closer to the communicating hole 28 and has a predetermined axial length L3.

Here, the axial length L2 of the middle oil chamber 26B, that is, the interval L2 between the throttle hole 27 and the communicating hole 28 may be made, for example, twice to five times a diameter of the cylindrical part 25A of the valve body 25. In addition, in the embodiment, a cross-sectional area of each of the oil chambers 26A, 26b, 26C, in other words, an inner diameter dimension of each of the oil chambers 26A, 26b, 26C is the same dimension. That is, as shown virtually in Fig. 3, the cross-sectional area of each of the oil chambers 26A, 26b, 26C is all an area as shown as B.

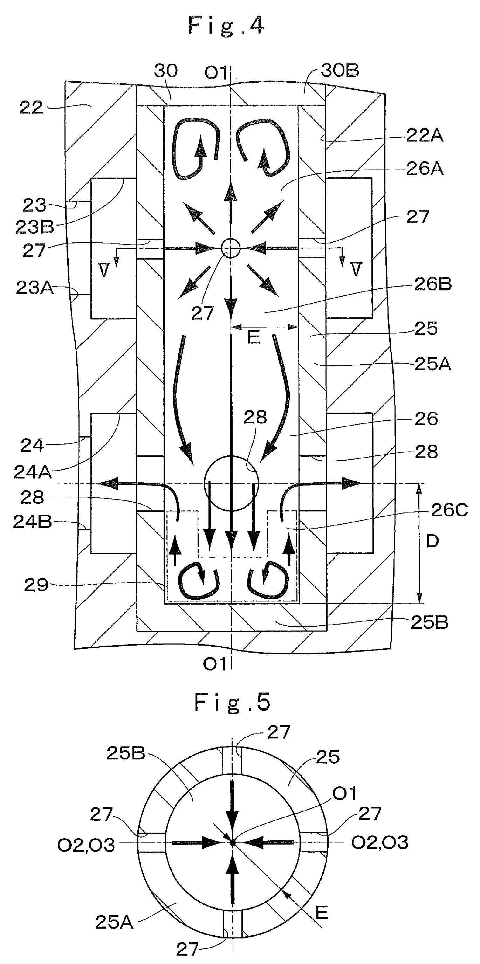

The throttle holes 27 each are formed to have the same diameter and are disposed to be symmetrical to the axis line O1-O1 of the valve body 25. That is, as seen clearly from the transverse plane in a position of each of the throttle holes 27 as shown in Fig. 5, the respective throttle holes 27 are arranged to be symmetrical about the axis line O1-O1 of the valve body 25 (line-symmetric on a basis of a line perpendicular to the axis line O1-O1). In other words, the respective throttle holes 27 extend in a direction perpendicular to the axis line O1-O1 and are arranged to be separated from each other by 90° at equal intervals in the circumferential direction of the valve body 25. In this case, an extension line of the axis line of each of the throttle holes 27 intersects with the axis line O1-O1.

The communicating holes 28 each are formed to have the same diameter and are arranged to be symmetrical to the axis line O1-O1 of the valve body 25. That is, the communicating holes 28 each also, as similar to the throttle holes 27 each, are arranged to be symmetrical about the axis line 01-01 of the valve body 25 (for example, line-symmetric on a basis of a line perpendicular to the axis line O1-O1). In other words, the communicating holes 28 each also extend in a direction perpendicular to the axis line 01-01 and are arranged to be separated from each other by 90° at equal intervals in the circumferential direction of the valve body 25. In this case, an extension line of the axis line of each of the communicating holes 28 intersects with the axis line O1-O1.

Here, a total oil passage cross-sectional area of the communicating holes 28 is set to be larger than a total oil passage cross-sectional area of the throttle holes 27. In addition, a minimum oil passage cross-sectional area of the oil chamber 26 is set to be larger than the total oil passage cross-sectional area of the communicating holes 28. Further, the minimum oil passage cross-sectional area of the oil chamber 26 is set to be larger than the total oil passage cross-sectional area of the throttle holes 27. That is, when the total oil passage cross-sectional area of the throttle holes 27 is indicated at A, the minimum oil passage cross-sectional area of the oil chamber 26 is indicated at B, and the total oil passage cross-sectional area of the communicating holes 28 is indicated at C, A, B and C are set in a relation of the following formula 1, preferably the following formula 2. It should be noted that in the first embodiment, the total oil passage cross-sectional area A of the throttle holes 27 is four times the cross-sectional area of one throttle hole 27, the minimum oil passage cross-sectional area B of the oil chamber 26 is a cross-sectional area of the oil chamber 26 and the total oil passage cross-sectional area C of the communicating holes 28 is four times the cross-sectional area of one communicating hole 28.

[Formula 1]

$$A < B$$

[Formula2]

$$A < C < B$$

Therefore, in the first embodiment, the hydraulic oil restricted in each of the throttle holes 27 is injected toward the axis line O1-O1 (axis center) of the oil chamber 26 as a cavitation jet flow from each of the throttle holes 27, making it possible to fill the oil chamber 26 with air bubbles or cause air bubbles to remain in the oil chamber 26. As a result, even when the air bubbles rupture in the oil chamber 26 to generate impact waves that cause the erosion, thanks to a function of the cushion effect with which the air bubbles filled in the oil chamber 26 absorb the impact waves, the impact waves are difficult to reach the inner surface of the valve body 25. As a result, it is possible to reduce the erosion on the inner surface of the valve body 25. It should be noted that in the first embodiment, the number of the throttle holes 27 is the same as the number of the communicating holes 28, but may differ from that.

Further, as shown in Fig. 4 and Fig. 5, when a distance between the other end of the oil chamber 26 in a side closer to the communicating hole 28 in the axis line O1-O1 direction of the valve body 25 and the communicating hole 28 is indicated at D (=L3 in Fig. 3) and when a radius of the maximum inscribed circle at a section of the minimum cross-section of the oil chamber 26 is indicated at E, D and E are set in a relation of the following formula 3.

[Formula 3]

$$D \geq E$$

Therefore, in the first embodiment, as shown in a dashed-two dotted line in Fig. 4, a recessed flow passage 29 in which the flow from the inner diameter side to the outer diameter side turns back can be formed in the midway point (specifically, the communicating hole side oil chamber 26C) of the flow of the hydraulic oil from the throttle holes 27 to the communicating holes 28. As a result, an air bubble excessive concentration part is formed in the recessed flow passage 29, the cushion effect by a large amount of air bubbles can be obtained in this air bubble excessive concentration part. Therefore, the erosion can be reduced due to this aspect as well.

The plug 30 is mounted in the opening side of the valve body mounting hole 22A of the housing 22. The plug 30 forms the oil chamber 26 together with the valve body 25. The plug 30 is formed in a stepped columnar shape by a large diameter part 30A and a small diameter part 30B smaller than the large diameter part 30A, and a male screw 30C threaded into a female screw 22B of the housing 22 is formed in the small diameter part 30B. The plug 30 is mounted in the housing 22 in a state where the valve body 25 is being inserted in the valve body mounting hole 22A of the housing 22. In this case, the plug 30 fixes the valve body 25 in the valve body mounting hole 22A by causing the male screw 30C of the plug 30 to be threaded into the female screw 22B of the housing 22. At this time, the valve body 25 can be pushed on the valve body mounting hole 22A of the housing 22 by the plug 30.

The hydraulic excavator 1 according to the first embodiment has the configuration as described above, and next, an operation thereof will be explained.

An operator of the hydraulic excavator 1 gets on the cab 5 and operates a traveling operating lever and pedal in the cab 5, thus making it possible to travel the lower traveling structure 2. In addition, the operator operates a working operating lever in the cab 5, thereby making it possible to operate the boom 8A, the arm 8B and the bucket 8C of the working mechanism 8 to perform an excavating work of earth and sand, for example.

Here, when the hydraulic oil is supplied as pressurized oil to the bottom side oil chamber 9D in the hydraulic cylinder 9 as the boom cylinder 8D via the directional control valve 14 from the hydraulic pump 11, the pressurized oil is supplied to the bottom side oil chamber 9D through the check valve 17 of the slow return valve 16. On the other hand, when the hydraulic oil is discharged to the tank 12 via the directional control valve 14 from the bottom side oil chamber 9D in the hydraulic cylinder 9, the hydraulic oil is discharged to the tank 12 through the throttle valve 21 of the slow return valve 16. At this time, since the throttling function is given to the hydraulic oil flowing in the throttle valve 21, the contraction movement of the hydraulic cylinder 9 can be suppressed to a slow speed.

Incidentally, it is assumed that the multistep throttle valve according to Patent Document 1 is assumed to aim at gradually reducing the pressures in a plurality of pressure chambers to alleviate the pressure reduction of each of the throttle holes and suppress the generation of the cavitation. That is, the multistep throttle valve according to Patent Document 1 is assumed to aim at the suppression of the erosion by suppressing the generation of the cavitation by the multistep throttle holes.

However, in the multistep throttle valve according to Patent Document 1, since the internal flow passages are complicated, the burden on a designer increases, and in addition thereto, increasing manufacturing costs and replacement costs cannot be avoided. In addition, since the internal flow passages are complicated, there possibly occurs a difference in an upstream flow state and a downstream flow state between the adjacent throttle holes lining up in the flowing direction of the hydraulic oil due to a pressure loss other than the restriction by generation of swirls, separation or the like inside the pressure chamber, a bias in inflow position of liquids, a difference in oil passage shape or the like. Therefore, there occur variations in pressure difference between the respective throttle holes, so that the throttling effect (pressure reduction) possibly concentrates on a section where the loss becomes the largest.

As a result, the pressure difference in this section becomes large, and there occurs the high possibility that the cavitation is generated due to a rapid reduction of the pressure. In addition, for example, when the cavitation is generated in the throttle hole other than at the lowest step among the multistep throttle holes, the erosion is possibly generated in the throttle hole at the following step based upon impact waves by the squeezing of the air bubbles in the downstream side of the throttle hole where the cavitation is generated. Therefore, the throttle hole at the following step cannot maintain an opening area and a flowing state of the liquid at a design time, a pressure balance as a whole of the multistep throttle valve is further disturbed, possibly increasing the generation of the cavitation and the generation of the erosion.

In addition to it, when the erosion is generated inside the multistep throttle valve, pieces (erosion powder) due to the erosion become contaminations which will flow in the flow passage, and the contaminations are jammed in the throttle hole or gaps in the downstream side, possibly making it impossible to maintain the performance as the throttle valve. In this way, the multistep throttle valve has the difficulty of maintaining the flow condition for enabling the effective suppression of the cavitation, and when the erosion is generated, the valve performance and lifetime possibly reduce rapidly, leading to a problem that the robust characteristics are difficult to be maintained.

On the other hand, in the first embodiment, when the hydraulic oil flows into the inflow part 23 of the throttle valve 21 from the bottom side oil chamber 9D in the hydraulic cylinder 9, the hydraulic oil is rapidly restricted by the throttle holes 27 to inject the high-speed jet flows with the cavitation toward the axis center (the axis line O1-O1) of the oil chamber 26 from the throttle holes 27. Here, the jet flows injected from the respective throttle holes 27 arranged symmetrical to the axis center of the valve body 25 collide with each other in the oil chamber 26 to spread out the flow directions of the jet flows. Therefore, the flow of the hydraulic oil in the oil chamber 26, as shown in arrows of Fig. 4 and Fig. 5, becomes disturbed flows with the swirling flow. At this time, air bubbles generated by the cavitation are also caught in the flow, and are filled in the oil chamber 26.

Here, the flows spread out inside the oil chamber 26 gradually advance in a direction of the communicating hole 28 where the pressure is low, thus forming one large flow. This flow does not advance directly into the communicating hole 28 open to the lateral side (inner peripheral surface) of the valve body because of the own inertia, and advances into the recessed flow passage 29 formed in the bottom part 25B side of the valve body 25. Inside this recessed flow passage 29, when the hydraulic oil flows into the recessed flow passage 29, the flow for inlet and the flow for outlet are formed simultaneously, causing the flow in a powerful whirl. A large amount of air bubbles are forced to remain in the recessed flow passage 29 by this swirl to form an air bubble excessive concentration part inside the recessed flow passage 29. As a result, the hydraulic oil having flowed out from the recessed flow passage 29 flows to the outflow part 24 through the communicating hole 28.

In this way, according to the first embodiment, the hydraulic oil can be restricted as designed by each of the throttle holes 27 of the valve body 25. In this case, the cavitation jet flows generated in the respective throttle holes 27 collide with each other in the oil chamber 26, which can spread out the jet flows and can disperse the positions where the jet flows collide. As a result, it is possible to suppress the cavitation jet flows causing the erosion from concentrating on a particular section on the inner surface of the valve body 25 for collision inside the valve body 25.

Along with it, spreading out the jet flows enables air bubbles to be filled inside the oil chamber 26. Thereby, it is possible to effectively obtain the cushion effect by which a large amount of air bubbles absorb the impact waves generated at the disruption time of the other air bubbles. As a result, the impact waves are difficult to reach the inner surface of the valve body 25, thus making it possible to effectively reduce the generation of the erosion.

Further, the cushion effect can be effectively obtained also in the recessed flow passage 29 by forming the air bubble excessive part in the recessed flow passage 29 in the oil chamber 26, thus making it possible to effectively reduce the generation of the erosion. In addition to it, it is possible to decay energy of the flow of the hydraulic oil by disruption of the air bubbles, absorption of the impact waves and losses of energy by the swirl inside the oil chamber 26. Therefore, even when the erosion is generated, the section for the generation can be limited to only the internal part of the oil chamber 26 (inner surface of the valve body 25). That is, the generation of the erosion can be securely suppressed in the flow passage downstream of the communicating hole 28.

In addition, the erosion is generated in the oil chamber 26, and further, even when the erosion develops, it is possible to make it difficult to give the influence to the opening characteristics of the throttle hole 27. Therefore, the performance as the throttle hole 27 can continue to be maintained to ensure the robust characteristics. In addition to it, even when the erosion is generated in the valve body 25 and further, develops, it is possible to easily replace the valve body 25 when necessary. Further, since the structure of the throttle valve 21 is formed of a simple single-step throttle, a design of the opening amount is easy, which makes it possible to reduce the burden on a designer and the manufacturing costs.

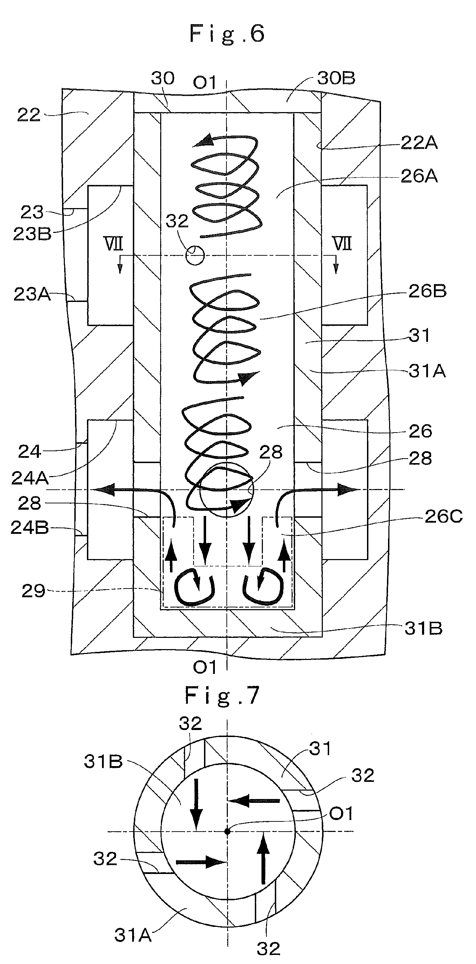

Next, Fig. 6 and Fig. 7 show a second embodiment of the present invention. The second embodiment is characterized in that a plurality of throttle holes are arranged in positions (twisted positions) where an axis line of each throttle hole does not intersect with an axis line of the valve body. It should be noted that in the second embodiment, components identical to those in the first embodiment are referred as identical numerals, and the explanation is omitted.

A valve body 31 is mounted in the valve body mounting hole 22A of the housing 22 as similar to the valve body 25 in the first embodiment. The valve body 31 is formed in a bottomed cylindrical shape having a circular form in cross section. That is, the valve body 31 includes a cylindrical part 31A that is formed in a circular form in cross section and extends in the axis line O1-O1 direction, and a bottom part 31B that closes the other end of the cylindrical part 31A. The valve body 31 forms the oil chamber 26 together with the plug 30.

Here, the cylindrical part 31A of the valve body 31 is provided with four throttle holes 32 as throttle holes. In this case, the throttle holes 32 each are formed with the same diameter, and are arranged to be symmetrical to the axis line O1-O1 of the valve body 31. That is, as seen clearly from a cross sectional view in positions of the respective throttle holes 32 as shown in Fig. 7, the four throttle holes 32 are respectively arranged to be symmetrical (point symmetrical) about the axis line O1-O1 of the valve body 31. In addition, the axis line to each of the throttle holes 32 is provided not to intersect with the axis line O1-O1 of the valve body 31. In other words, the throttle holes 32 are respectively arranged in twisted positions to the axis line O1-O1 of the valve body 31 and to be separated by 90° at equal intervals in the circumferential direction of the valve body 31.

The second embodiment is configured such that the axis line of each of the throttle holes 32 is arranged not to intersect with the axis line O1-O1 of the valve body 31 as described above, and the basic function is not particularly different from that of the first embodiment.

Particularly, according to the second embodiment, as shown in arrows in Fig. 6 and Fig. 7, the high-speed jet flows of the hydraulic oil with the cavitation generated from the respective throttle holes 32 are combined to promote the flow in a constant direction in the oil chamber 26 to form a revolving flow therein. At this time, the cavitation air bubbles are stirred by the revolving flow to be quickly filled in the oil chamber 26. Thereafter, the cavitation air bubbles flow into the recessed flow passage 29 disposed in the oil chamber 26 while forming the revolving flow, thus forming the air bubble excessive concentration part inside the recessed flow passage 29. The hydraulic oil having flowed out from the recessed flow passage 29 flows into the outflow part 24 through the communicating holes 28.

In this way, according to the second embodiment, it is possible to generate the revolving flow in the oil chamber 26 to suppress the jet flows from concentrating on the particular section on the inner surface of the valve body 31 for collision. As a result, local generation of the erosion and development thereof can be suppressed. Along with it, it is possible to effectively decay the kinetic energy contributing to the erosion by the energy loss due to the revolving flow or swirl. Further, the air bubbles are caught in the revolving flow, thereby making it possible to fill the air bubbles inside the oil chamber 26 quickly. Therefore, the cushion effect can be effectively obtained to reduce the erosion more effectively.

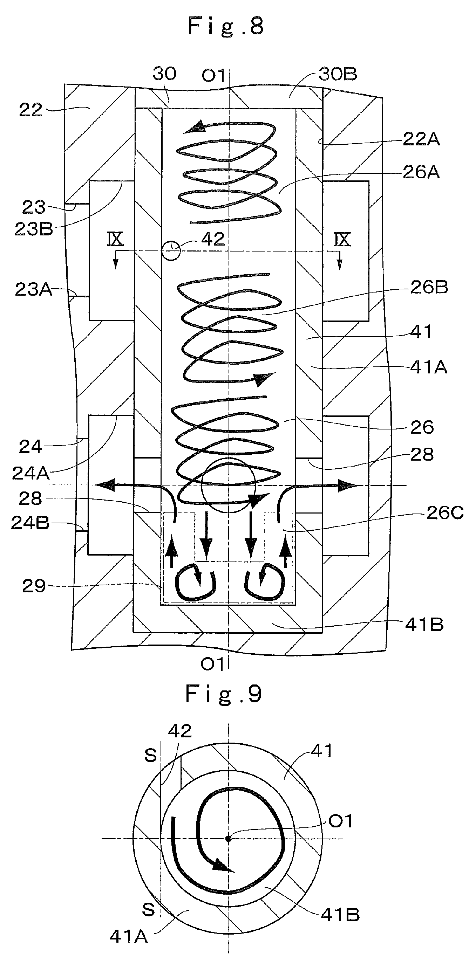

Next, Fig. 8 and Fig. 9 show a third embodiment of the present invention. The third embodiment is characterized in that one throttle hole is arranged in a position (twisted positions) where an axis line thereof does not intersect with an axis line of the valve body and in a tangential direction to the inner surface of the valve body. It should be noted that in the third embodiment, components identical to those in the first embodiment are referred as identical numerals, and the explanation is omitted.

A valve body 41 is mounted in the valve body mounting hole 22A of the housing 22 as similar to the valve body 25 in the first embodiment. The valve body 41 formed in a bottomed cylindrical shape having a circular form in cross section. That is, the valve body 41 includes a cylindrical part 41A that is formed in a circular form in cross section and extends in the axis line O1-O1 direction, and a bottom part 41B that closes the other end of the cylindrical part 41A. The valve body 41 forms the oil chamber 26 together with the plug 30.

Here, the cylindrical part 41A of the valve body 41 is provided with a throttle hole 42 as a single throttle hole. Here, the axis line of the throttle hole 42 does not intersect with the axis line O1-O1 of the valve body 41. The throttle hole 42 is arranged in a tangential S-S direction to the inner peripheral surface of the valve body 41. That is, the throttle hole 42 opens to the inner peripheral surface of the valve body 41 such that the tangent S-S to the inner peripheral surface of the valve body 41 is included in the inner peripheral surface of the throttle hole 42. In other words, the throttle hole 42 is arranged in the valve body 41 such that the high-speed jet flow of the hydraulic oil injected from the throttle hole 42 advances along the inner peripheral surface of the valve body 41.

The third embodiment is configured to arrange the throttle hole 42 in such a manner that the axis line of the throttle hole 42 does not intersect with the axis line O1-O1 of the valve body 41, and in the tangential S-S direction to the inner peripheral surface of the valve body 41 as described above, and the basic function is not particularly different from that of each of the first embodiment and the second embodiment.

Particularly, according to the third embodiment, as shown in arrows in Fig. 8 and Fig. 9, the high-speed jet flow of the hydraulic oil with the cavitation generated from the throttle hole 42 advances along the inner peripheral surface of the valve body 41 to form a revolving flow in the oil chamber 26. At this time, the cavitation air bubbles are stirred by the revolving flow to be quickly filled in the oil chamber 26. Thereafter, the cavitation air bubbles flow into the recessed flow passage 29 disposed in the oil chamber 26 while forming the revolving flow, thus forming the air bubble excessive concentration part inside the recessed flow passage 29. The hydraulic oil having flowed out from the recessed flow passage 29 flows into the outflow part 24 through the communicating holes 28.

In this way, according to the third embodiment, as similar to the second embodiment, it is possible to generate the revolving flow in the oil chamber 26 to reduce the generation of the erosion. Further, since the throttle hole is configured of one throttle hole 42, the design is easy, thus making it possible to further reduce the burden on a designer. Along with it, the man-hour at the manufacturing can be made small to reduce the manufacturing costs. Further, since the throttle hole is configured of one throttle hole 42, the element of disturbance of the flow due to variations in pressure distribution of the inflow part or the like is not required to be considered, making it possible to stably realize the required throttling performance.

It should be noted that the third embodiment is explained by taking a case where one throttle hole 42 is arranged to the tangential S-S direction as an example. However, the present invention is not limited thereto, but, for example, although not shown, a plurality of throttle holes may be disposed. In this case, the axis line of each of the throttle holes is arranged not to intersect with the axis line of the valve body. Further, each of the throttle holes is arranged in a tangential direction to the inner peripheral surface of the valve body. In this case, the plurality of throttle holes may be arranged to be symmetrical (point-symmetrical) about the axis line of the valve body. In addition, the plurality of throttle holes may be arranged at equal intervals in the circumferential direction of the valve body.

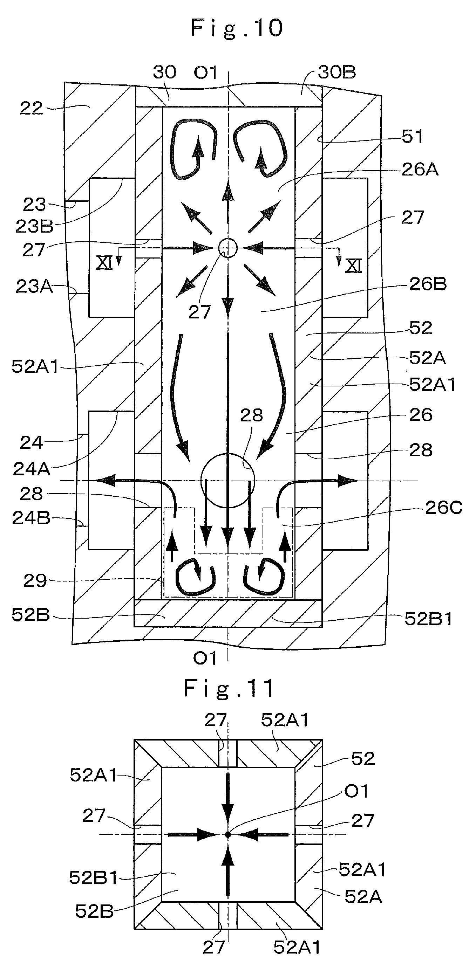

Next, Fig. 10 and Fig. 11 show a fourth embodiment of the present invention. The fourth embodiment is characterized in that a cross section of a valve body mounting hole in a housing and a cross section of a valve body each are formed in a quadrangle shape. It should be noted that in the fourth embodiment, components identical to those in the first embodiment are referred as identical numerals, and the explanation is omitted.

The housing 22 is provided with a valve body mounting hole 51 having a quadrangle form in cross section. The valve body 52 is mounted in the valve body mounting hole 51 of the housing 22. The valve body 52 is formed in a bottomed cylindrical shape having a quadrangle form in cross section. That is, the valve body 52 includes a cylindrical part 52A that is formed in a quadrangle form in cross section and extends in the axis line O1-O1 direction, and a bottom part 52B that closes the other end of the cylindrical part 52A. In this case, the cylindrical part 52A includes four plate members 52A1, and the bottom part 52B includes one plate member 52B1 as a member different from the cylindrical part 52A. Accordingly, the oil chamber 26 is formed as a closed space (chamber) in a quadrangular, columnar shape as a whole by lateral surfaces of the plate members 52A1 configuring the cylindrical part 52A, an inner surface (upper surface in Fig. 10) of the plate member 52B1 configuring the bottom part 52B, and a lower surface (lower surface in Fig. 10) of the plug 30.

The fourth embodiment is configured such that the cross section of the valve body mounting hole 51 of the housing 22 and the cross section of the valve body 52 each are formed in the quadrangle shape as described above, and the basic function is not particularly different from that of the first embodiment as described above.

Particularly in the fourth embodiment, the valve body 52, the throttle hole 27 and the communicating hole 28 become easily-worked. In addition to it, the valve body 52 can be manufactured by combining the plate members 52A1, 52B1 to reduce the manufacturing costs.

It should be noted that the fourth embodiment is explained by taking a case where the other end of the valve body 52 is closed by the plate member 52B1 of the bottom part 52B as an example. However, the present invention is not limited thereto, but, for example, the plate member 52B1 of the bottom part 52B may be omitted. That is, the other end of the valve body 52 may be closed by the bottom surface of the valve body mounting hole 51 of the housing 22.

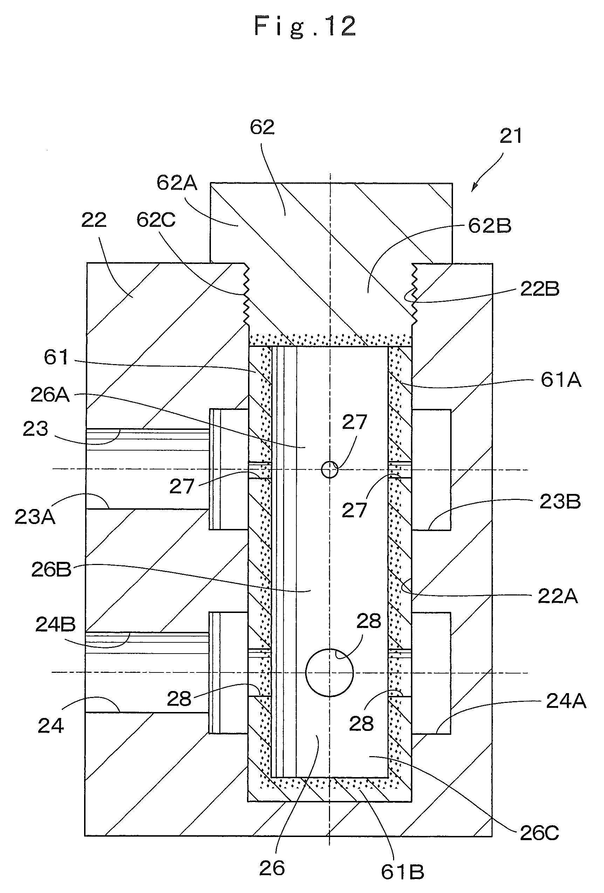

Next, Fig. 12 shows a fifth embodiment of the present invention. The fifth embodiment is characterized in that surfaces of a valve body and a plug are subjected to hardening treatment or a valve body and a plug each are formed with a hardening material. It should be noted that in the fifth embodiment, components identical to those in the first embodiment are referred as identical numerals, and the explanation is omitted.

In the fifth embodiment, as attached in a dot pattern in Fig. 12, a surface of a valve body 61 including a cylindrical part 61A and a bottom part 61B (an inner surface forming at least the oil chamber 26, specifically an inner peripheral surface of the cylindrical part 61A and a bottom surface of the bottom part 61B) is subjected to hardening treatment (hardening surface treatment). In addition, a plug 62 includes a large diameter part 62A, a small diameter part 62B and a male screw 62C, and an end surface of the small diameter part 62B forming at least the oil chamber 26 in the plug 62 is subjected to hardening treatment (hardening surface treatment). It should be noted that the valve body 61 and the plug 62 may be formed with hardening materials.

The fifth embodiment is configured such that the valve body 61 and the plug 62 are subjected to the hardening surface treatment (or the valve body 61 and the plug 62 may be formed with hardening materials) as described above, and the basic function is not particularly different from that of the first embodiment as described above.

Particularly in the fifth embodiment, the hardening surface treatment is executed to only a section where the erosion is possibly generated, or only a member where the erosion is possibly generated may be formed with a hardening material. Therefore, it is possible to reduce the generation and development of the erosion. In this case, both of an improvement on durability to the erosion and suppression on an increase in costs can be achieved.

It should be noted that the fifth embodiment is explained by taking a case where both of the valve body 61 and the plug 62 are subjected to the hardening surface treatment or both of the valve body 61 and the plug 62 are formed with hardening materials as an example. However, the present invention is not limited thereto, but, for example, one of the valve body and the plug may be subjected to the hardening surface treatment or one of the valve body and the plug may be formed with a hardening material.

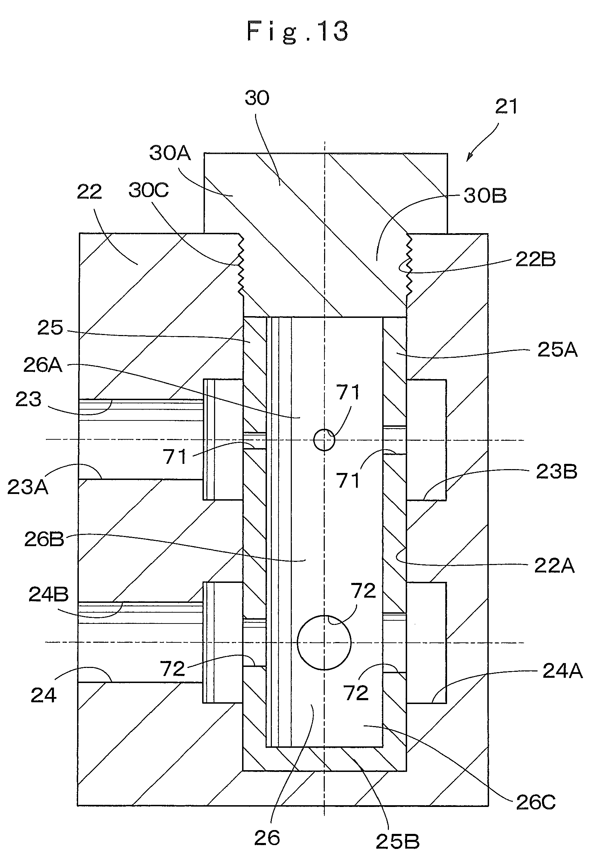

Next, Fig. 13 shows a sixth embodiment of the present invention. The sixth embodiment is characterized in that an inner diameter dimension of each of throttle holes differs (an inner diameter dimension of a throttle hole in a side closer to an inflow side radial hole of an inflow part is made smaller than an inner diameter dimension of a throttle hole in a side farther therefrom). Further, an inner diameter dimension of each of communicating holes differs (an inner diameter dimension of a communicating hole in a side closer to an outflow side radial hole of an outflow part is made smaller than an inner diameter dimension of a communicating hole in a side farther therefrom). It should be noted that in the sixth embodiment, components identical to those in the first embodiment are referred as identical numerals, and the explanation is omitted.

The cylindrical part 25A of the valve body 25 is provided with four throttle holes 71 as throttle holes and four communicating holes 72. Here, the throttle holes 71 each differ in inner diameter dimension. Specifically, the inner diameter dimension of the throttle hole 71 in a side closer to the inflow side radial hole 23A of the inflow part 23 among the respective throttle holes 71 is made smaller than an inner diameter dimension of the throttle hole 71 in a side farther from the inflow side radial hole 23A. In other words, in the respective throttle holes 71, the respective inner diameter dimensions are set such that the flow amount of the hydraulic oil flowing into the oil chamber 26 through each of the throttle holes 71 from the inflow side annular groove 23B of the inflow part 23 is the same flow amount.

On the other hand, the communicating holes 72 each also differ in inner diameter dimension. Specifically, the inner diameter dimension of the communicating hole 72 in a side closer to the outflow side radial hole 24B of the outflow part 24 among the respective communicating holes 72 is made smaller than the inner diameter dimension of the communicating hole 72 in a side farther from the outflow side radial hole 24B. In other words, in the respective communicating holes 72, the respective inner diameter dimensions are set such that the flow amount of the hydraulic oil flowing out from the oil chamber 26 through each of the communicating holes 72 to the outflow side annular groove 24A of the outflow part 24 is the same flow amount.

The sixth embodiment is configured such that the throttle holes 71 each differ in inner diameter dimension and the communicating holes 72 each differ in inner diameter dimension as described above, and the basic function is not particularly different from that of the first embodiment as described above.

Particularly, in the sixth embodiment, the hydraulic oil of the same amount can be injected into the oil chamber 26 from the throttle holes 71 each. That is, when the hydraulic oil passes through the respective throttle holes 71 of the valve body 25, a bias possibly occurs in the pressure distribution of the inflow side annular groove 23B of the valve body 25 based upon the direction in which the hydraulic oil flows, the shape of the flow passage (for example, a positional relation and a distance between the inflow side radial hole 23A and the throttle hole 71) or the like. In this case, since the inner diameter dimension of each of the throttle holes 71 differs, even when the pressure of an inlet section of each of the throttle holes 71 differs, the hydraulic oil of the same flow amount can pass through each of the throttle holes 71. Therefore, the hydraulic oil of the same amount can be injected into the oil chamber 26 from the throttle holes 71 each. It is possible to cause the hydraulic oil of the same flow amount to pass through each of the communicating holes 72 as well to suppress the flow from concentrating on one communicating hole 72.

In this way, according to the sixth embodiment, even when the bias possibly occurs in the pressure distribution in the vicinity of the valve body 25 based upon the inflow direction of the hydraulic oil or the flow passage shape, the flow amount of the jet flow injected from the throttle holes 71 each is the same. Therefore, it is possible to cause the jet flows from the respective throttle holes 71 to equally collide in the oil chamber 26. As a result, since the jet flows from the respective throttle holes 71 spread out in the oil chamber 26 without the bias, it is possible to suppress the jet flows from concentrating on a part of the inner peripheral surface of the valve body for collision, finally the erosion from being generated and developing.

In addition, since the flow amount of the hydraulic oil flowing out from the communicating hole 72 can be same for each of the communicating holes 72, the concentration of the flows on one communicating hole 72 can be suppressed. Therefore, it is possible to suppress generation of the cavitation, which is caused by a rapid reduction in pressure due to the flow concentration on the one communicating hole 72, in the outflow part 24.

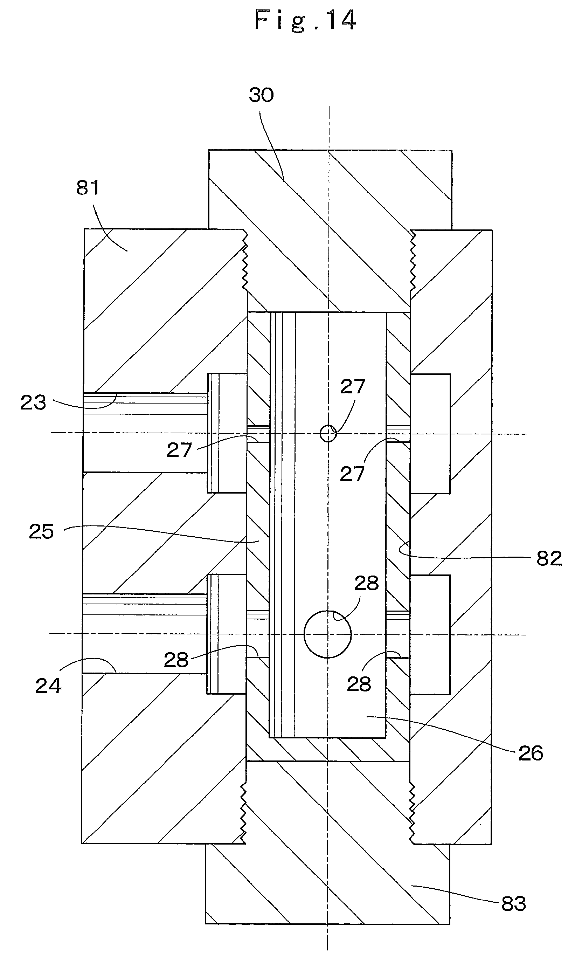

It should be noted that each of the embodiments is explained by taking a case where the hollow cylindrical valve body mounting hole 22A or 51 one end of which opens to an outside is provided in the housing 22 as an example. However, the present invention is not limited thereto, but, for example, as in a first modification shown in Fig. 14, a hollow cylindrical valve body mounting hole 82 both ends of which open to an outside may be provided in a housing 81. In this case, the plug 30 is mounted in an opening in one end side of the valve body mounting hole 82, and a different plug 83 is mounted in an opening in the other end side of the valve body mounting hole 82. That is, the openings in the both ends of the valve body mounting hole 82 can be configured to be respectively closed by the plugs 30 and 83.

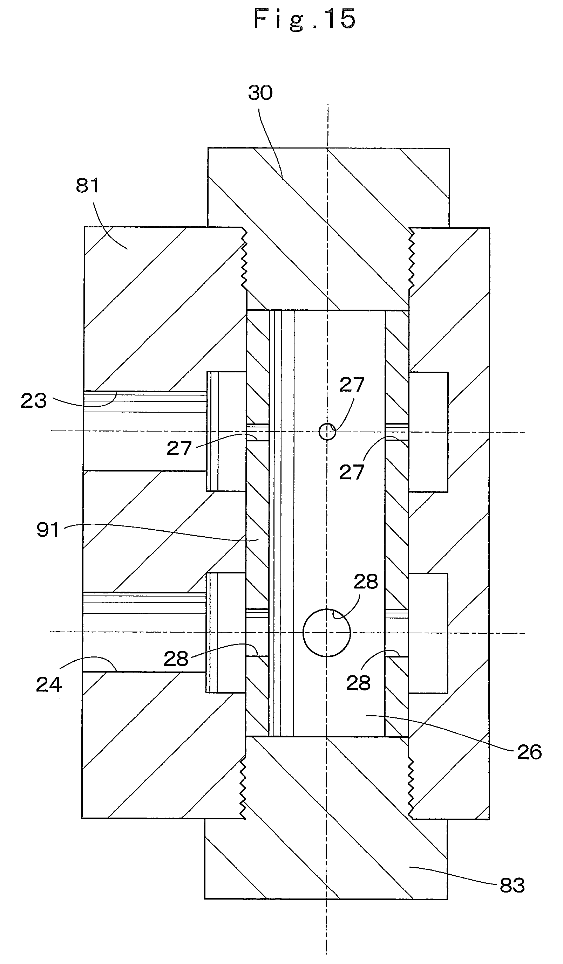

Each of the embodiments is explained by taking a case where the valve body 25, 31, 41, 52 or 61 is formed as the bottomed cylindrical body one end in the axis line direction of which is the opening end closed by the plug 30 or 62 and the other end of which is closed by the bottom part 25B, 31B, 41B, 52B or 61B, as an example. However, the present invention is not limited thereto, but as in a second modification shown in Fig. 15, a valve body 91 may be formed as a cylindrical body one end in the axis line direction of which is an opening end closed by the plug 30 and the other end of which is closed by the different plug 83. Further, although not shown, a valve body may be formed as a cylindrical body one end in the axis line direction of which is an opening end closed by a plug and the other end of which is closed by a housing (bottom surface of a bottomed valve body mounting hole).

The first embodiment is explained by taking a case where the throttle holes 27 as throttle holes are arranged in one line along the peripheral surface of the valve body 25 as an example. Further, a case where the communicating holes 28 also are arranged in one line along the peripheral surface of the valve body 25 is explained as an example. However, the present invention is not limited thereto, but, for example, throttle holes may be provided in a plurality of lines along the peripheral surface of the valve body. That is, the plurality of throttle holes may be provided to be separated in the axis line direction of the valve body. In addition, communicating holes may be provided in a plurality of lines along the peripheral surface of the valve body. That is, the plurality of communicating holes may be provided to be separated in the axis line direction of the valve body. This configuration is true of the other embodiments and modifications.

The first embodiment is explained by taking a case where the throttle hole 27 as the throttle hole and the communicating hole 28 are arranged in the same phase in the circumferential direction of the valve body 25, that is, in the same position in the circumferential direction in a perspective view in the upper-lower direction as an example. However, the present invention is not limited thereto, but, for example, a throttle hole and a communicating hole may be arranged in different phases in the circumferential direction of the valve body. This configuration is true of the other embodiments and modifications.

Each of the embodiments is explained by taking the hydraulic excavator 1 as the construction machine as an example. However, the present invention is not limited thereto, but the present invention may be applied widely to various industrial machines including construction machines such as hydraulic cranes, wheel loaders, forklifts, and the like, in other words, various working machines in which a throttle valve is provided in a hydraulic circuit. Further, the respective embodiments and the respective modifications are described as examples for explanation of the present invention, and therefore, without mentioning, it is possible to perform partial replacement and combination of the components described in the different embodiments and modifications.

According to the above embodiments, the generation of the erosion can be reduced to maintain the robust characteristics of the valve performance.

(1) That is, according to the embodiment, the valve body is provided with the throttle holes and the communicating holes that are arranged to be separated in the axis line direction of the valve body, and further, a relation of the total oil passage cross-sectional area A of the throttle holes and the minimum oil passage cross-sectional area B of the oil chamber is set to A<B. Therefore, the cavitation jet flows are injected toward the oil chamber by the throttle holes provided in the valve body, thus enabling air bubbles to be filled (stay) inside the oil chamber. Thereby, even when air bubbles are disrupted inside the oil chamber to generate impact waves causing the erosion, it is possible to obtain the cushion effect that the air bubbles filled in the oil chamber absorb the impact waves. As a result, the impact waves are difficult to reach the member surface, thus making it possible to reduce the generation of the erosion.

Further, it is possible to limit the section where the erosion is generated to the inside of the oil chamber to suppress the generation of the erosion in the outflow part or the like of the housing positioned downstream of the oil chamber. In addition, since it is possible to suppress the generation of the erosion in the throttle hole, even when the erosion develops in the oil chamber, a change in opening characteristics (throttle characteristics due to a change in opening area of the throttle hole) can be suppressed. Therefore, the performance as the throttle valve can continue to be maintained to maintain the robust characteristics of the valve performance. In addition to it, since the structure of the throttle valve is formed of a simple single step throttle, a design of the opening amount is easy, which makes it possible to reduce the burden on a designer and the manufacturing costs.

(2) According to the embodiment, the inflow part of the housing has the inflow side annual groove recessed toward the radial outside over the entire periphery of the inner peripheral surface of the valve body mounting hole, and the plurality of throttle holes are provided in the valve body and are arranged to be symmetrical about the axis line of the valve body. Therefore, the cavitation jet flows injected from the respective throttle holes collide with each other inside the oil chamber to spread out the flow directions. As a result, the concentration of the jet flows in one direction can be suppressed and it is possible to fill the air bubbles inside the oil chamber more quickly and equally. As a result, the cushion effect by a large amount of air bubbles can be effectively obtained to reduce the erosion more effectively.

(3) According to the embodiment, the valve body is formed in a cylindrical shape having a circular form in cross section, and the throttle hole comprises a plurality of throttle holes that are provided in the valve body, and the throttle holes each have an axis line that does not intersect with the axis line of the valve body, and are arranged at equal intervals in the circumferential direction of the valve body. Therefore, the cavitation jet flows injected from the respective throttle holes form the revolving flow inside the oil chamber, thereby making it possible to spread out the air bubbles with the revolving flow in the oil chamber to fill the air bubbles in the oil chamber quickly. Therefore, it is possible to more effectively obtain the cushion effect by a large amount of the air bubbles to reduce the erosion more effectively.

(4) According to the embodiment, the valve body is formed in a cylindrical shape having a circular form in cross section, one throttle hole is provided in the valve body, the throttle hole has an axis line that does not intersect with the axis line of the valve body, and is arranged in the tangential direction of the inner peripheral surface of the valve body. Therefore, the cavitation jet flow injected from the throttle hole forms the revolving flow along the inner peripheral surface of the valve body inside the oil chamber, thereby making it possible to spread out the air bubbles with the revolving flow in the oil chamber to fill the air bubbles in the oil chamber quickly. Therefore, it is possible to more effectively obtain the cushion effect by a large amount of the air bubbles even in one throttle hole to reduce the erosion more effectively.

(5) According to the embodiment, when a distance between the other end in the axis line direction of the oil chamber in a side closer to the communicating hole in the axis line direction of the valve body and the communicating hole is indicated at D, and a radius of a maximum inscribed circle in the section of the oil chamber having a minimum cross sectional area is indicated at E, a relation of D≥E is set. Therefore, the recessed flow passage is provided in the midway point of the flow of the oil passage for connection from the throttle hole to the outflow part of the housing. When the flow in the oil chamber advances into the recessed flow passage, the air bubble excessive concentration part can be further formed in the oil chamber. Therefore, the cushion effect by a large amount of air bubbles can be more effectively obtained in the recessed flow passage to reduce the erosion more effectively.

(6) According to the embodiment, at least one of the valve body and the plug is formed with a hardening material or a surface thereof is subjected to hardening treatment. Therefore, the hardening material is used only in the section where the erosion is possibly generated or the hardening surface treatment is executed only thereto, thus making it possible to reduce the generation of the erosion more effectively while suppressing the manufacturing costs.

(7) According to the embodiment, the oil chamber includes a total of three oil chambers of a throttle side oil chamber that is positioned between the throttle hole and one end of the oil chamber in a side closer to the throttle hole and has a predetermined axial length, a middle oil chamber that is positioned between the throttle hole and the communicating hole and has a predetermined axial length, and a communicating hole side chamber that is positioned between the communicating hole and the other end of the oil chamber in a side closer to the communicating hole and has a predetermined axial length. Therefore, the air bubbles can be filled in each of the three oil chambers, and the cushion effect can be stably obtained in these three oil chambers each. As a result, the erosion can be more effectively reduced. Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

DESCRIPTION OF REFERENCE NUMERALS

1: Hydraulic excavator (Construction machine)
21: Throttle valve
22, 81: Housing
22A, 51, 82: Valve body mounting hole
23: Inflow Part
24: Outflow part
25, 31, 41, 52, 61, 91: Valve body
26: Oil chamber
26A: Throttle hole side oil chamber
26B: Middle oil chamber
26C: Communicating hole side oil chamber
27, 32, 42, 71: Throttle hole
28, 72: Communicating hole
29: Recessed flow passage
30, 62, 83: Plug
O1-O1: Axis line

Claims

1. A throttle valve comprising:

a housing (22, 81) provided with a hollow cylindrical valve body mounting hole (22A, 51, 82) at least one end of which opens to an outside thereof and that extends in an axis line (O1-O1) direction;
an inflow part (23) and an outflow part (24) that are provided to open to the valve body mounting hole (22A, 51, 82) of the housing (22, 81) and be separated from each other in the axis line (O1-O1) direction, the inflow part (23) allowing for inflow of oil from the outside and the outflow part (24) allowing for outflow of the oil having flowed therein to the outside;
a hollow shaped valve body (25, 31, 41, 52, 61, 91) that is mounted in the valve body mounting hole (22A, 51, 82) of the housing (22, 81) and is provided with an oil chamber (26) formed therein; and
a plug (30, 62, 83) that is mounted in an opening side of the valve body mounting hole (22A, 51, 82) of the housing (22, 81) and pushes the valve body (25, 31, 41, 52, 61, 91) against the housing (22, 81), **characterized in that**:

the valve body (25, 31, 41, 52, 61, 91) is formed as a cylindrical body at least one end in the axis line (O1-O1) direction of which is an opening end to be closed by the plug (30, 62, 83), and
the valve body (25, 31, 41, 52, 61, 91) includes at least one of throttle holes (27, 32, 42, 71) that establish communication between the inflow part (23) and the oil chamber (26) of the housing (22, 81) and restrict the oil flowing into the oil chamber (26), and one or a plurality of communicating holes (28, 72) that are arranged to be separated from the throttle holes (27, 32, 42, 71) in the axis line direction of the valve body (25, 31, 41, 52, 61, 91) to establish communication between the outflow part (24) and the oil chamber (26) of the housing (22, 81), wherein
when a total oil passage cross-sectional area of the throttle holes (27, 32, 42, 71) is indicated at A, and a minimum oil passage cross-sectional area of the oil chamber (26) is indicated at B, a relation of A<B is set.

2. The throttle valve according to claim 1, wherein the inflow part (23) of the housing (22, 81) includes an inflow side annular groove (23B) recessed toward the radial outside over the entire periphery of the inner peripheral surface of the valve body mounting hole (22A, 51, 82),
the throttle hole (27, 32, 71) comprises a plurality of throttle holes that are provided in the valve body (25, 31, 52, 61, 91), and
the throttle holes (27, 32, 71) each are arranged to be symmetrical about the axis line (O1-O1) of the valve body (25, 31, 52, 61, 91).

3. The throttle valve according to claim 1 or 2, wherein the valve body (25, 31, 41, 61, 91) is formed in a cylindrical shape having a circular form in cross section,
the throttle hole (27, 32, 71) comprises a plurality of throttle holes that are provided in the valve body (25, 31, 61, 91), and
the throttle holes (32) each have an axis line that does not intersect with the axis line (O1-O1) of the valve body (31), and are arranged at equal intervals in the circumferential direction of the valve body (31).

4. The throttle valve according to claim 1 or 2, wherein the valve body (25, 31, 41, 61, 91) is formed in a cylindrical shape having a circular form in cross section,
the throttle hole (42) comprises a single throttle hole that is provided to the valve body (41), and
the throttle hole (42) has an axis line that does not intersect with the axis line (O1-O1) of the valve body (41), and is arranged in a tangential (S-S) direction of the inner peripheral surface of the valve body (41).

5. The throttle valve according to claim 1, wherein when a distance between the other end in the axis line direction of the oil chamber (26) in a side closer to the communicating hole (28, 72) in the axis line (01-01) direction of the valve body (25, 31, 41, 52, 61, 91) and the communicating hole (28, 72) is indicated at D, and a radius of a maximum inscribed circle in the section of the oil chamber (26) having a minimum cross sectional area is indicated at E, a relation of D≥E is set.

6. The throttle valve according to claim 1, wherein at least one of the valve body (25, 31, 41, 52, 61, 91) and the plug (30, 62, 83) is formed with a hardening material or a surface thereof is subjected to hardening treatment.

7. The throttle valve according to claim 1, wherein the oil chamber (26) includes a total of three oil chambers (26A, 26B, 26C) comprising a throttle hole side oil chamber (26A) that is positioned between the throttle hole (27, 32, 42, 71) and one end of the oil chamber (26) in a side closer to the throttle hole (27, 32, 42, 71) and has a predetermined axial length (L1), a middle oil chamber (26B) that is positioned between the throttle hole (27, 32, 42, 71) and the communicating hole (28, 72) and has a predetermined axial length (L2), and a communicating hole side chamber (26C) that is positioned between the communicating hole (28, 72) and the other end of the oil chamber (26) in a side closer to the communicating hole (28, 72) and has a predetermined axial length (L3).

Fig.1

# Fig.2

Fig.3

# Fig.4

# Fig.5

Fig.6

Fig.7

Fig.8

Fig.9

Fig.10

Fig.11

Fig.12

# Fig.13

# Fig.14

# Fig.15

Europäisches
Patentamt
European
Patent Office
Office européen
des brevets

**EUROPEAN SEARCH REPORT**

Application Number

EP 15 20 2252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 25 00 723 A1 (TOUR AGENTURER AB) 17 July 1975 (1975-07-17) | 1-3,5-7 | INV. F15D1/02 F15B21/04 |
| Y | * the whole document * | 4 | |
| Y | DE 37 17 128 A1 (WELLAND & TUXHORN ARMATUREN UN [DE]; MAX PLANCK GESELLSCHAFT [DE]) 8 December 1988 (1988-12-08) * figures 2-3 * | 4 | |
| Y | EP 2 042 685 A1 (CAMERON INT CORP [US]) 1 April 2009 (2009-04-01) * figures 2-11 * | 4 | |

TECHNICAL FIELDS
SEARCHED        (IPC)

F15D
F15B
F16K
F16L

The present search report has been drawn up for all claims

| Place of search | Date of completion of the search | Examiner |
|---|---|---|
| Munich | 22 April 2016 | Díaz Antuña, Elena |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 20 2252

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2016

| Patent document cited in search report | | | Publication date | Patent family member(s) | | | Publication date |
|---|---|---|---|---|---|---|---|
| DE 2500723 | | A1 | 17-07-1975 | DE<br>FR | 2500723<br>2257830 | A1<br>A1 | 17-07-1975<br>08-08-1975 |
| DE 3717128 | | A1 | 08-12-1988 | NONE | | | |
| EP 2042685 | | A1 | 01-04-2009 | BR<br>EP<br>EP<br>EP<br>EP<br>SG<br>SG<br>US<br>WO | PI0817249<br>2042685<br>2385212<br>2386716<br>2386717<br>176478<br>196845<br>2010288389<br>2009040518 | A2<br>A1<br>A1<br>A1<br>A1<br>A1<br>A1<br>A1<br>A1 | 16-06-2015<br>01-04-2009<br>09-11-2011<br>16-11-2011<br>16-11-2011<br>29-12-2011<br>13-02-2014<br>18-11-2010<br>02-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6131772 A

- JP HEI211786 B